# EUROPEAN PATENT APPLICATION

(11) **EP 0 990 463 A2**
(43) Date of publication of application: **05.04.2000**
(21) Application number: 99118929.1
(22) Date of filing: 25.09.1999
(51) Int. Cl.: B01D 53/82, B01D 53/74, C08K 5/21

(54) **Reactive plate for removal of gaseous impurities and a method of its production**

(30) Priority: 29.09.1998 CZ 312298
(71) Applicant: AGS Jicin a.s., 50648 Jicin (CZ)
(72) Inventor: Matzke, Vladimir, 50601 Jicin (CZ); Fischer, Petr, 46605 Jablonec n.N. (CZ)
(74) Representative: Bergmeier, Werner, Dipl.-Ing.

(57) **Abstract**

The invention relates to a reactor plate for cleaning air and/or combustion products by removal of gaseous impurities and to a method of its production consisting in mixing 100 mass units of urea with between 1 to 5 mass units of methylolurea, melting it then by exposure to up to 140°C, and heating it up then to between 165°C and 185°C whereby at least a part of urea is transformed to cyanuric acid and to amide of allophanic acid whereupon the melted substance is poured into a mould and let to solidify. In its compact solid state, the reactor plate produced by this method comprises solidified mixture of urea, cyanuric acid , and allophanic acid.

## Description

### Technical field

The invention relates to a reactor plate for cleaning air and/or combustion products, in particular sulphur and nitrogen oxides, carbon monooxide and ozone, comprising urea in solid state.

The invention also relates to a method of production of such reactor plate serving for air cleaning and/or combustion products by removal of gaseous impurities.

### Background art

The patent CZ 279 833 B6 discloses reactor plates comprising urea in solid state and produced by heating the urea to 150°C with its subsequent cooling and solidification.

The drawback of such reactor plates consists in their high fragility and progressive disintegration to powder. The ammonia gas escaping during the production of the reactor plate produces the frothing of the reactor plate rendering difficult if not impossible its production on indusrial scale.

The disclosed patent application CZ 3594-96 describes reactor plates produced by pressing from cyanuric acid heat treated at temperatures, in the first stage of 132°C, and in the second stage of 110°C, of the substance exposed to pressing followed by its cooling and solidification. Cyanuric acid in crystalline state is used in this production.

The drawback of this method consists in particular in the complicated method of production and in high costs of cyanuric acid in crystalline state. For cleaning air and/or combustion products with the reactor plate of this type, the use of propane is indispensable. The industrial feasibility of the method is rather unlikely.

### Principle of the invention

The above drawbacks of the background art are reduced or totally removed by the reactor plate according to the invention whose principle consists in that the reactor plate comprises in solid compact state a mixture of urea, cyanuric acid, and amide of allophanic acid. These components are responsible for chemical processes resulting in air and/or combustion products cleaning by removal of gaseous impurities. During the cleaning, the reactor plates are steady and relatively consolidated with no mechanical particles getting loose from them.

Both the strength of the reactor plates and their surface can be increased by providing ribs on them. Preferably, at least some of the ribs can be adapted so es to permit the reactor plates to match suitably each other.

Preferably, the ribs are parallel to the direction of air or combustion products streaming along the surface of the reactor plates so as to obtain more uniform streaming with reduced turbulence.

An additional increase in the strength of the reactor plates can be obtained by mounting reinforcing members in the reactor plates.

In a preferred embodiment of the invention, these reinforcing members can be made as bars and/or as a grate.

The principle of the method of production of the reactor plates according to the invention consists in that pure crystalline or granulated urea is mixed with methylolurea in the ratio of 100 mass units of urea to between 1 and 5 mass units of methylolurea, then is melted by being heated to between 132°C and 140°C and subsequently is heated to between 160°C and 185°C, at least a part of the urea undergoing transformation into the amide of allophanic acid and into cyanuric acid, whereupon the melted substance is poured into a mould and let to solidify.

The urea transformation into the amide of allphanic acid and into cyanuric acid improves the utility properties of the reactor plate, in particular its capacity to clean air and/or combustion products by removing gaseous impurities from them.

To obtain the required crystalline structure, the solidification process of the melted substance poured in the mould is accelerated by cooling.

Preferably, the mould used for casting the reactor plate is water cooled.

### Brief description of the drawings

Examples of embodiment of the reactor plates according to the invention are schematically shown in the enclosed drawings in which show Fig. 1 the reactor plate in axonometric view, Fig. 2 the arrangement of the reactor plates for cleaning air and/or impurities, Fig. 3 a section of the reactor plate fitted with reinforcing means consisting of a bar, and Fig. 3b an axonometric view of the reactor plate with a reinforcing grate cast in it.

### Examples of embodiment of the invention

As will be further explained in the examples of embodiment of the production of the reactor plates for cleaning air and/or combustion products by removing gaseous impurities, the reactor plate comprisies in the solid compact state a solidified mixture of urea, cyanuric acid and amide of allophanic acid. The substance to be cleaned streams along and close to the surface of the reactor plates.

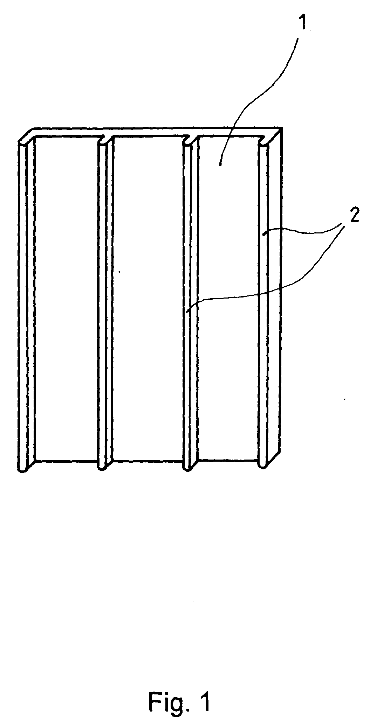

The reactor plates **1** shown in Figs. 1, 2, and 3a are fitted with ribs **2** which can be of various shapes and/or height. In the example of embodiment of the reactor plate **1** shown in Fig. 1 there are provided four parallel ribs **2** out of which the outer ones **2** are higher and serve to permit the reactor plates **1** to match each other while the inner ones are lower, permitting the passage of air and/or combustion products along them and serving in particular to increase the surface area of the reactor plate **1**. The shape of the ribs **2** can be arbitrary, and the ribs can be provided on each side of the reactor plate **1**.

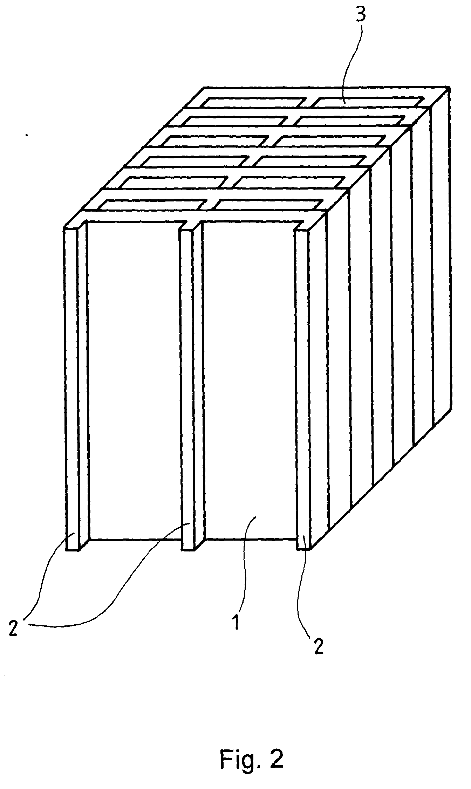

The arrangement of a number of the reactor plates **1** for cleaning air and/or combustion products is shown in Fig. 2 where there are provided on one side of the reactor plates **1** three parallel ribs **2**, equal in height and matching the other side of the reactor plates **1** so that the two reactor plates **1** lying on and matching each other create between them two channels **3** for letting air and/or combustion products stream through them. The shape of the channels **3** produced in this way renders the cleaning air and/or combustion produc ts current more uniform and reduces its turbulence.

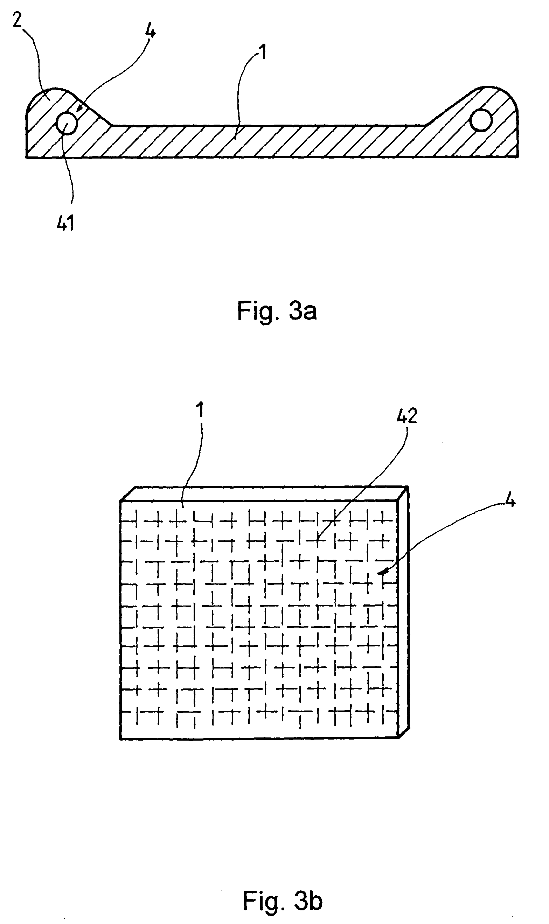

The reactor plates **1** can be made as flat ones, without ribs, as is shown in Fig. 3b. Well-known not illustrated spacers and/or other well-known means providing for a constant mutual position of the reactor plates **1** are used for the arrangement of the reactor plates **1** in this case.

To increase the strength of the reactor plates **1,** reinforcing members **4,** for instance reinforcing bars **41,** are inserted in the ribs **2** of the reactor plate **1** (while in pre-solidified state ) as is shown in Fig. 3a. The rein-forcing member **4** also can be made as a grate inserted into the flat reactor plate **1** (while in pre-solidified state) as is shown in Fig. 3b. Other well-known reinforcing members or combinations of reinforcing members also can be used.

### Examples of the method of production of the reactor plates

### Example No. 1

Pure crystalline or granulated urea is mixed with methylolurea in a ratio of 100 mass units of urea to 1 mass unit of methylolurea. The mixture is thoroughly stirred-up, then heated to 140°C and let to melt completely. During the heating and melting, the mixture can be stirred. After reaching its melted state, it is uninterruptedly stirred and heated to 160°C during which at least a part of urea is transformed into amide of allophanic acid and into cyanuric acid with a partial escape of ammonia gas. The melted substance is then poured into a prepared mould and let to solidify. During the solidification of the substance, the mould is intensely cooled, for instance with water.

During the melting process, the methylolurea continues to condense, reduces the amount of ammonia gas escaping from the substance, and gets transformed into solid urea polymers strengthening the structure of the reactor plate.

### Example 2

Pure crystalline urea is thoroughly mixed with methylolurea in a mass ratio of 100 to 5. The mixture is then exposed to the melting process at 132°C and, when melted, heated to 185°C. Upon reaching this temperature, it is poured into a prepared mould and let to solidify in it.

The reactor plate according to this example of embodiment comprises a higher amount of urea polymers by which its strength is increased.

### Example 3

Pure crystalline or granulated urea is continuously or cyclically mixed with methylolurea in a well-known mixing apparatus in a mass ratio of 100 to 2. The mixture thus created is led continuously from the mixing apparatus into a well-known melting unit in which it is completely melted by exposure to temperature between 132°C and 140°C, then is in a following continuous heating unit heated up to 180°C and then poured into prepared moulds.

## Claims

1. A reactor plate for cleaning air and/or combustion products, in particular sulphur and nitrogen oxides, carbon monooxide and ozone, comprising urea in solid state, characterized by that the reactor plate comprises a mixture of urea, cyanuric acid and amide of allophanic acid.

2. A reactor plate as claimed in Claim 1, characterized by that the reactor plate is fitted with ribs for giving it additional strength, increasing its surface and matching the reactor plates when laid on each other.

3. A reactor plate as claimed in Claim 1 or 2, characterized by that reinforcing members are provided in the reactor plate.

4. A reactor plate as claimed in Claim 3, characterized by that the reinforcing members are made as bars and/or a grate.

5. The method of production of the reactor plates as claimed in Claims 1 to 4, characterized by that pure crystalline or granulated urea is perfectly mixed with methylolurea in a ratio of 100 mass units of urea to between 1 and 5 mass units of methylolurea, then is melted by exposure to between 132°C and 140°C, and then is heated to between 160°C and 185°C whereby at least a part of urea is transformed into cyanuric acid and into amide of allophanic acid whereupon the melted substance is poured into a mould and let to solidify.

6. The method of production of reactor plates as claimed in Claim 5, characterized by that the process of the solidification of the melted substance in the mould is accelerated by cooling.

7. The method as claimed in Claim 6, characterized by that the mould is cooled with water.
